# EUROPÄISCHE PATENTSCHRIFT

(11) **EP 0 387 277 B1**
(45) Veröffentlichungstag und Bekanntmachung des Hinweises auf die Patenterteilung: **17.03.1993**
(21) Anmeldenummer: 88909986.7
(22) Anmeldetag: 25.11.1988
(51) Int. Cl.: F01P 3/02, F02F 1/36

(54) **ÖLGEKÜHLTER ZYLINDERKOPF**
COOLED CYLINDER HEAD
CULASSE REFROIDIE A L'HUILE

(30) Priorität: 25.11.1987 DE 3739899
(43) Veröffentlichungstag der Anmeldung: 19.09.1990
(73) Patentinhaber: Elsbett, Ludwig, D-91161 Hilpoltstein (DE); Elsbett, Günter, D-91161 Hilpoltstein (DE); Elsbett, Klaus, D-91161 Hilpoltstein (DE)
(72) Erfinder: Elsbett, Ludwig, D-91161 Hilpoltstein (DE); Elsbett, Günter, D-91161 Hilpoltstein (DE); Elsbett, Klaus, D-91161 Hilpoltstein (DE)
(86) Internationale Anmeldenummer: DE8800731
(87) Internationale Veröffentlichungsnummer: WO8904916

(56) Entgegenhaltungen:
- DE-A- 2 729 050
- DE-C- 3 314 543
- US-A- 4 573 436

## Beschreibung

Die Erfindung geht aus von einem ölgekühlten Zylinderkopf in einer Viertakt-Brennkraftmaschine mit einem Brennverfahren mit geringen Wärmeverlusten, bei dem die Verbrennung in einer heißen Kernzone stattfindet und diese Kernzone durch eine isolierende Schicht aus Überschußluft umgeben ist, und bei dem dadurch die Zylinderwand mindestens unterhalb des Ringträgerbereichs des Kolbens keiner äußeren Kühlung bedarf.

Gegenstand vorliegender Anmeldung ist folglich die Verbesserung des Kühlsystems, namentlich des Zylinderkopfes, einer Viertakt-Kolbenbrennkraftmaschine. Die Verbesserung bewirkt u.a. Kraftstoffersparnisse durch Kühlungseinsparung, die Herabsetzung der Reibverluste des Kolbens an der Zylinderwand und die Vermeidung von Wärmespannungen.

Gegenstand vorliegender Erfindung ist es auch, einen möglichen Umrüstsatz zum Umbau der auf dem Markt befindlichen wasser- oder luftgekühlten Brennkraftmaschinen vorzuschlagen, wobei ein verbesserter Wärmehaushalt eines ölgekühlten Motors auf diese übertragbar gemacht wird.

Verbesserungen des motorischen Wärmehaushaltes können nicht darin gesehen werden, daß die dem Brennraum benachbarten Teile möglichst intensiv gekühlt werden. Jedoch hat sich diese Auffassung in den letzten Jahrzehnten durchgesetzt. Die Verwendung des Wassers als übliches Kühlmedium in der Praxis deutet darauf hin. Wasser mit seiner hohen Wärmekapazität gilt als sicheres Mittel, dem Motor optimal Wärme entziehen zu können. Diese Sicherheit hat auch den Nachteil eines dafür notwendigen separaten Kühlkreislaufes gerechtfertigt, einschließlich der zu schaffenden Durchflußmöglichkeiten im Zylinderkopf und Motorblock. Obwohl Wasser also nicht in Berührung mit Funktionsteilen des Motors kommen darf und dem motorischen Betrieb vom Ursprung her fremd ist, hat es sich in bezug auf seine Kühlleistung durchgesetzt. Das hatte zur Folge, daß der gesamte Wärmehaushalt des Motors auf die Eigenschaften des Kühlmittels Wasser ausgerichtet wurde, anstatt den Motor auf die Optimierung seines Arbeitsvorganges hin ausrichten zu können; der Effekt auf die Entwicklung von Motorkomponenten war z. B. der, daß man stark wärmeleitende Materialien, wie Aluminium, für Kolben, Zylinder und auch Zylinderkopf verwendet, um die intensive Kühlleistung des Wassers bis in das Motorinnere hinein fortwirken lassen zu können.

Wärmerisse im Material sind nur ein Phänomen, die dabei den Gegensatz von motorischem Arbeisvorgang mittels heißer Gase und schockartiger Abkühlung des Materials auf das Niveau der Wasserkühlung verdeutlichen. Dabei spielt eine Rolle, daß die Möglichkeit der schnellen Wärmeabfuhr auch zu brennverfahren geführt hat, die diese Wärmeabfuhr über die Brennraumwände zur Grundlage ihres Funktionierens machten, also alle unithermischen Brennverfahren, die die gesamte Luft mit dem Brennstoff vermischen und beim Abbrennen desselben die Brennraumwände befeuern. Dazu zählen auch Kammerverfahren, die mit einer wesentlichen Aufhitzung der Brennraumwände verbunden sind.

Der Nachteil dieser Kühlauffassung ist bis heute der, daß bis zu einem Drittel der eingesetzten Energie an das Kühlwasser verlorengeht und von dort über Wärmetauscher der Umgebungsluft zugeführt werden muß. Nicht anders verhält es sich bei Motoren mit äußerer Luftkühlung, die mit einer Vielfalt von Kühlrippen versuchen, in der Abfuhr von Wärme dem wassergekühlten Motor nicht nachzustehen. Auch Versuche mit Ölkühlung, die hin und wieder unternommen werden, funktionieren nach diesem Prinzip: die geringere Wärmekapazität des Öles gegenüber Wasser wird durch Vergrößerung der Durchflußmenge und Vergrößerung der Ölkühlräume gegenüber wassergekühlten Motoren versucht wettzumachen. Ölkühlung kann aus der Sicht der schnellen Wärmeabfuhr mit Wasser nicht konkurrieren. Da die Ölpumpeinrichtungen vergrößert werden müssen, sinkt der Wirkungsgrad der Maschine.

Auch war es falsch, am Ende einer solchen Entwicklung, die die Wärmeabfuhr zu ihrem Credo gemacht hatte, den Einbau von Keramikteilen im Brennraum zu forciere. Zwar belegt dies den Willen zur Wärmedämmung, da bei den unithermischen Brennverfahren jedoch die Brennraumwände aufgeheizt werden, werden sie zum Ausgangspunkt der Verbrennung selbst, so daß auch noch die letzte natürlich verbliebene Isolationsschicht, die Luftgrenzschicht zwischen Keramikteil und Brennraum, zerstört wird. Bei Wegfall dieser letzten Luftisolation zwischen heißen Gasen und Wand steigen die Wärmeübergänge an das Material sprungartig an, anstatt, wie ursprünglich beabsichtigt, abzunehmen.

Vernachlässigt wurde bei all diesen Kühlungskonzepten der eigentliche Sinn des ganzen motorischen Wärmehaushaltes, der darin besteht, daß mit der Brennwärme des Kraftstoffes die Arbeitsluft erwärmt werden soll, um durch ihre Ausdehnung den Kolben zu bewegen, und nicht um mit dieser Brennwärme den Motor oder Wasser oder andere Teile aufzuwärmen.

Erst das zeitweise Ansteigen der Energiepreise und der Gedanke an das Ende billiger fossiler Brennstoffe brachten wieder eine Besinnung auf den eigentlichen Zweck der Lufterhitzung im Zylinder und damit die Zielsetzung, äußere Kühlung, ob mit Wasser oder Umgebungsluft, als Konzept zurückzudrängen, um höhere Wirkungsgrade erreichen zu können. Der beginnende Einsatz von pflanzlichen Ölen als Kraftstoff, der noch viel höhere Anforderungen an den motorischen Wärmehaushalt stellt, tat ein übriges, um eine solche Entwicklung zu beschleunigen.

Es war aber nicht damit getan, die falsche Auffassung der intensiven Wärmeabfuhr nur zu relativieren, es mußte von Grund auf umgedacht werden; diesem Umdenken rechnet sich auch vorliegende Schrift zu. Will man nämlich die Wärmeabfuhr von innen nach außen unterbinden, sind eine Reihe von Maßnahmen vom Zentrum der Hitzeentstehung, der Brennzone, aus, über den Kolben bis hin zum Zylinder zu beachten.

Der erste Schritt war die Schaffung eines duothermischen Brennverfahrens im Gegensatz zu den unithermischen, die bis heute im Ottomotor, Kammermotor und auch D.I.-Dieselmotor noch üblich sind. D. h. zwischen zentraler Brennzone und Brennraumwand wird eine Luftschicht aufrechterhalten, die nicht an der Verbrennung teilnimmt und qua Isolationskraft weniger Wärme an die Brennraumwände entläßt (DE-OS 22 41 355). Wird weniger Wärme an die Brennraumwände, insbesondere den Kolben, abgegeben, besteht keine Notwendigkeit mehr, diesen in Aluminium auszuführen. Es konnte auf Kolben aus Eisenlegierung zurückgegangen werden. Eisenlegierung hat wiederum weniger Leitfähigkeit für die am Kolben noch anfallende Wärme. Diese Maßnahme wird begleitet durch eine dritte, indem die Wärmeübergangsflächen vom Kolben zum Zylinder minimiert werden; der Ringträger wird vom Kolbenhemd getrennt und auch in dem verbleibenden Kolbenoberteil sind die Wärmeübertragungsflächen zwischen Kolbenboden und Ringträger noch reduziert (z. B. DE-OS 32 10 771). Dieser Stand der Technik führte aufgrund der geschilderten Wärmedämmungsmaßnahmen zu einer motorischen Gesamtkühlungsminimierung, die bereits mit Öls als Kühlmittel ausgeführt war, ohne daß die gering Wärmekapazität des Öles Probleme schuf (DE-OS 33 14 543). Dabei spielt die Ölspritzkühlung der Zylinderwände und des Kolbens von unten eine wichtige Rolle.

Bei dem gegebenen Stand der Entwicklung ölgekühlter Motoren, stellt sich u.a. die Frage, ob es nicht auch möglich ist, gängige, auf dem Markt befindliche Viertaktbrennkraftmaschinen, die wasser- oder luftgekühlt ausgeführt sind, im Nachrüst- bzw. Motorenaustauschverfahren auf die Möglichkeiten der neuen Ölkühlung umzustellen. Da die neue Ölkühlung hinsichtlich Kraftstoffverbrauch und dem Einsatz alternativer Kraftstoffe wie z. B. Pflanzenölen Vorteile bietet, kann ein solcher Umbau lohnend sein.

Die Aufgabe der Erfindung lautet dahingehend, bei Beibehaltung der bisherigen Motorblöcke und insbesondere bei Beibehaltung des bisher üblichen Schraubenbildes wasser- und luftgekühlter Motoren einen thermodynamisch optimierten Motor zu schaffen, bei dem die baulichen Maßnahmen für den Kühlaufwand auf ein Minimum beschränkt sind.

Die Lösung besteht darin, daß der Zylinderkopf mindestens die Zone des Zylinders im Bereich oberhalb des oberen Kolbendichtringes überdeckt und ein Ölringkanal zur Kühlung dieses Bereiches nur im Zylinderkopf ausgebildet ist oder daß der Zylinderkopf in seiner Dichtfläche zur Zylinderwandung bzw. zum Motorgehäuse eine Ringnut enthält, die zusammen mit der Dichtfläche der Zylinderwandung bzw. dem Motorgehäuse einen Ölringkanal bildet, der der Kühlung diese Bereiches dient.

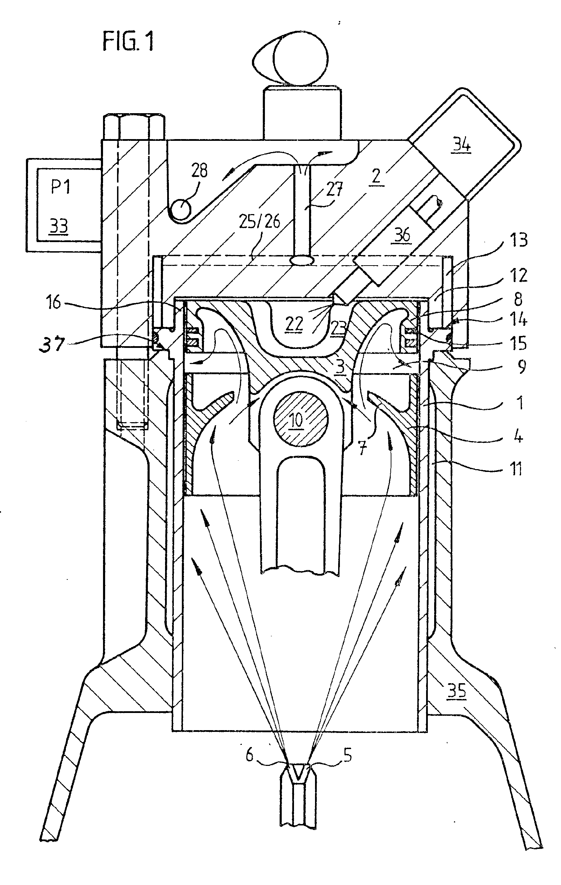

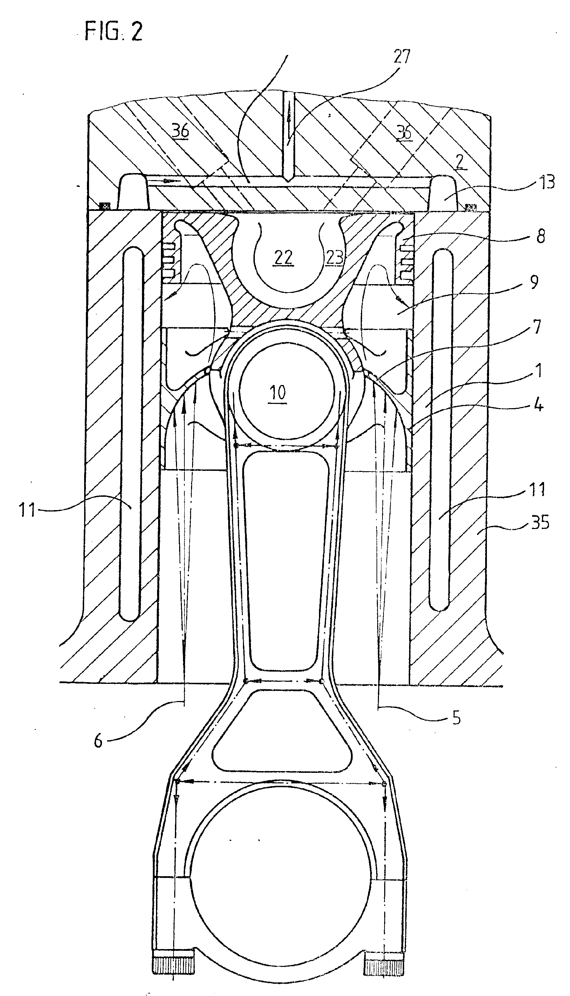

In den beigegebenen Figuren 1 und 2 sind zwei Möglichkeiten solcher Zylinderkopfumbausätze gezeigt, die sich hinsichtlich aufgeladener Motoren und Saugmotoren unterscheiden können. Hinsichtlich aufgeladener Motoren soll der Zylinder in den Zylinderkopf hineinragen. Bei Saugmotoren ist eine ausreichende Kühlung erreicht, wenn in der alten Trennebene von Zylinderkopf und Zylinder der neue Kopf aufgesetzt wird. Bei aufgeladenen Motoren wird der Kopf an der Dichtstelle zum Zylinder bis in Höhe eines Dichtbundes, der in Höhe des ersten Dichtringes liegt, gekühlt.

Diesbezügliche Einzelheiten der Konstruktion sind den beigegebenen Ansprüchen zu entnehmen.

Soll eine Verlängerung des Kolbens vermieden werden, kann der Abdichtbund des Kopfes auch in das Gehäuse eingesenkt werden.

### Bildbeschreibung

In Fig. 1 ist mit (1) der Zylinder, mit (2) der Zylinderkopf, mit (3) das Kolbenoberteil, mit (4) der Gleitschuh und mit (5) und (6) die Ölspritzdüsen zur inneren Ölkühlung des Zylinders und Kolbens bezeichnet. Als oberer Zylinderteil ist das Zylinderende zu verstehen, das den Brenngasen ausgesetzt ist.

Bei einem Umbau ist hier die Zylinderbüchse (1) in den Kopf verlängert vorgesehen. Die innere Kühlung des Zylinders (1) erfolgt sowohl unmittelbar durch das Spritzöl wie auch mittelbar über den Gleitschuh (4), auf dessen Leitschaufeln (7) das Spritzöl auftrifft und verteilt wird. Die Verteilung des Kühlöls auf das Kolbenoberteil (3) mit dem Dichtmantel (8) und den Freiraum (9) zwischen dem Kolbenoberteil (3) und dem Gleitschuh (4) sowie dem Kolbenbolzen (10) wird von den Leitschaufeln (7) gesteuert. Bei entsprechender Gestaltung der Leitschaufel würde auch eine Leitschaufel für diese Aufgabe genügen.

Da es auf eine gleichmäßige Temperierung des Zylinders auf seiner ganzen Länge ankommt, würde ein äußerer Kühlmantel stören. Der Zwischenraum (11) zwischen Zylinder (1) und Gehäuse (35) würde, wenn er mit Öl gefüllt ist, also nur die Aufgabe einer Schalldämpfung besitzen, d. h. sofern in den Zwischenraum (11) Flüssigkeit eingefüllt wird, soll es erfindungsgemäß nicht laufend ersetzt oder umgewälzt werden.

Zum Zwecke der gleichmäßigen Temperierung des Zylinders (1) ist jedoch eine Unterbrechung des Wärmeflusses vom Zylinderkopf (2) zum Zylinder (1) dadurch vorgesehen, daß im Falle aufgeladener Motoren ein dünner Dichtsteg (12) am Zylinderkopf (2) angesetzt ist, der von einem Ölmantel/Ringkanal (13) so gekühlt wird, daß er die Temperatur des Zylinders (1) annimmt.

Die Länge dieses Dichtsteges (12) ist so bemessen, daß an der Dichtstelle (14) die Temperatur des Zylinders (1) erreicht ist. In aller Regel ist dies bis zur Ebene des ersten Kolbenringes (15) erreicht, in den meisten Fällen auch schon oberhalb. Um die Aufheizung des Dichtsteges (12) so klein wie möglich zu halten, ist am Zylinder (1) ein Bund (16) angesetzt, der den Dichtsteg (12) von der Brenngasen abschirmt.

Fig. 2 zeigt, daß im Falle von Saugmotoren und entsprechend geringeren Mitteldrücken ein solcher Dichtsteg (12) mit Ölmantel (13) nicht vorgesehen ist. Weitere Mittel wie die Vervielfachung der Einspritzdüsen (36) und ein dadurch möglicher späterer Einspritzbeginn führen zu einer geringeren Erwärmung von Kolbenoberteil und Zylinder, so daß ein Ölmantel/Ringkanal (13) oberhalb der Ebene des oberen Totpunktes des Kolbens im Zylinderkopf ausreicht, um den thermischen Ausgleich von Zylinderkopf und Zylinder mit Ölkühlung zu gewährleisten. Der Umbausatz ist in solchen Fällen besonders einfach zu gestalten, weil die Zylinderbüchse (1) nicht in den Kopf (2) ragt bzw. Kopf (2) nicht in den Motorblock übergreift. Auch bei diesem Umbaubeispiel entfällt die Kühlfunktion des vormaligen Kühlkanals (11), so daß nach dem Umbau lediglich der neue Zylinderkopf Kühlraüme ausbildet, die anmeldungsgemäß mit Öl beschickt werden.

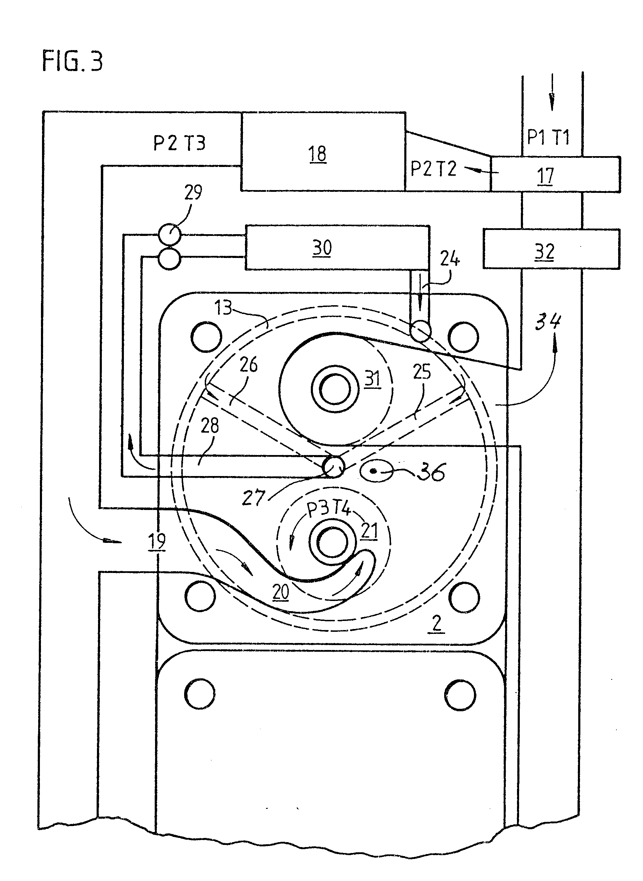

Um sichert zu sein, daß auch bei hohen Mitteldrücken der obere Teil nicht heißer als der untere wird, ist die Arbeitsluft durch einen Ladeluftkühler (18 in Fig. 3) gekühlt und durch einen Drallkanal (19) in eine hohe Umlaufgeschwindigkeit versetzt. Die Kühlwirkung dieser Arbeitsluft wird dadurch erhöht, daß im Einlaßkanal (19) ein Engpaß (20) vorgesehen ist, so daß die Luft beim Eintritt in den Zylinder in der Einlaßöffnung (21) einen wesentlichen Druckabfall und damit auch eine erhebliche Abkühlung erfährt.

Diese beschriebene Wirkung ist mit der gezeigten Druck- und Temperaturbeziehung in Fig. 3 dargestellt: Beim Eintritt in den Verdichter (17) hat die Luft den Druck P1 und die Temperatur T1, beim Austritt aus dem Verdichter (17) und im Übergang zum Ladeluftkühler (18) ist der Druck auf P2 und die Temperatur auf T2 gestiegen. Im Ladeluftkühler (18) wird nur die Temperatur von T2 nach T3 reduziert. Erst nach dem Engpaß (20) im Einlaßkanal reduzieren sich Druck und Temperatur auf P3 und T4 (Prinzip der Kältemaschine).

Die Abstimmung der Kühlung im Zylinderunterteil durch die innere Ölkühlung und die Abstimmung der inneren Abkühlung durch die Ladeluftkühlung ist so geregelt, daß die größere Aufheizung mit zunehmendem Mitteldruck im oberen Zylinderteil mit der größeren Kühlwirkung der zunehmenden Ladeluftkühlung übereinstimmt. Um diese Abstimmung der beiden inneren Kühlungen zu unterstützen, ist das Kolbenoberteil (3) aus einer Eisenlegierung gefertigt und die Ölkühlung des Kolbenoberteils (3) so ausgeprägt, daß vom Kolbenoberteil (3) und Dichtmantel (8) an den Zylinder (1) keine wesentliche Wärmeleitung zustande kommt. Um auch die Aufheizung des Kolbenoberteils kleinzuhalten, ist die Verbrennung so gestaltet, daß entsprechend den Gesetzen im rotierenden Massehaufen die heiße Brennzone (22) durch einen Überschußluftmantel (23) vom Kolbenoberteil (3) isoliert ist.

Die Kühlung des Zylinderkopfes (2) ist durch den Ölmantel (13) und die Bohrungen (24), (25), (26), (27) und (28) in der Fig. 3 so gesteuert, daß die Temperaturspannungen möglichst abgebaut werden. D. h. das von der Ölpumpe (29) durch den Ölkühler (30) über die Bohrung (24) in den Zylinderkopf (2) eingebrachte Kühlöl kommt in erster Linie dem Auslaßkanal (31) zugute, von dem aus die Abgase über die Abgasleitungen (34) in die Abgasturbine (32) geleitet werden, von der aus der Verdichter (17) angetrieben wird.

Die hohen Temperaturen im Zylinderkopfzentrum werden durch die Ölabflußbohrung (27) (Fig. 1 bis 3) reduziert. Die Einlaßseite des Zylinderkopfes (2) wird durch die Einlaßluft, die über den Kanal (33) dem Motor zugeführt wird, kühlgehalten.

Damit auch kein statischer Verzug entstehen kann, ist die Dichtkraft über dem Dichtsteg (12) so in das Gehäuse (25) eingeleitet, daß die Auflagefläche (37) des Zylinders (1) auf dem Gehäuse (35) senkrecht unter dem Dichtsteg (12) angeordnet ist.

## Patentansprüche

1. Ölgekühlter Zylinderkopf, oder Austauschzylinderkopf, oder Umbauzylinderkopf in einer Viertakt-Brennkraftmaschine mit einem Brennverfahren mit geringen Wärmeverlusten, bei dem die Verbrennung in einer heißen Kernzone stattfindet und diese Kernzone durch eine isolierende Schicht aus Überschußluft umgeben ist, und bei dem dadurch die Zylinderwand mindestens unterhalb des Ringträgerbereichs des Kolbens keiner äußeren Kühlung bedarf, dadurch gekennzeichnet, daß der Zylinderkopf (2) mindestens die Zone des Zylinders (1) im Bereich oberhalb des oberen Kolbendichtringes (15) überdeckt und ein Ölringkanal (13) zur Kühlung dieses Bereiches nur im Zylinderkopf ausgebildet ist oder daß der Zylinderkopf (2) in seiner Dichtfläche zur Zylinderwandung bzw. zum Motorgehäuse eine Ringnut (13) enthält, die zusammen mit der Dichtfläche der Zylinderwandung bzw. dem Motorgehäuse einen Ölringkanal bildet, der der Kühlung dieses Bereiches dient.

2. Zylinderkopf nach Anspruch 1, dadurch gekennzeichnet, daß durch den Zylinderkopf im Zylinder vorhandene Kühlmittelkanäle verschlossen werden, bzw. bei luftgekühlten Brennkraftmaschinen die Luftkühlung entfallen kann.

3. Zylinderkopf nach Anspruch 1, dadurch gekennzeichnet, daß die Gasdichtheit des Zylinders durch planes Aufliegen von Dichtsteg (12) auf Dichtstelle (14) dichtungslos hergestellt ist.

4. Zylinderkopf nach Anspruch 1, dadurch gekennzeichnet, daß die Auflagefläche (37) des Zylinders (1) auf dem Gehäuse (35) senkrecht unter dem Dichtsteg (12) angeordnet ist.

5. Zylinderkopf nach einem oder mehreren der vorangegangenen Ansprüche, dadurch gekennzeichnet, daß im Zylinderkopf der Zu- und Ablauf (24, 25, 26) des Kühlöles für den Ringkanal (13) sich an der Auslaßventilseite (31) und im Kopfzentrum (27/28) befindet.

## Claims

1. Oil-cooled cylinder head, or replacement cylinder head, or redesign cylinder head in an internal combustion engine comprising a combustion procedure with lower heat losses, the combustion being performed in a hotter core zone and this core zone being surrounded by an insulating layer of excess air, this cylinder wall not requiring outer cooling, at least not below the ring carrier area of the piston, characterized in that the cylinder head (2) covers at least the zone of the cylinder (1) above the upper piston packing ring (15) and an oil ring conduit (13) is formed only in the cylinder head for cooling this area or that the cylinder head (2) includes a ring groove (13) in its sealing surface to the cylinder wall or to the engine casing, which forms an oil ring conduit together with the sealing surface of the cylinder wall or the engine casing, serving for cooling this area.

2. Cylinder head according to claim 1, characterized in that the coolant conduits existing in the cylinder are closed by the cylinder head, or in case of air-cooled internal combustion engines air cooling might be dispensed with.

3. Cylinder head according to claim 1, characterized in that the gas tightness of the cylinder is achieved by the sealing bar (12) lying planely on the sealing spot (14) without a packing.

4. Cylinder head according to claim 1, characterized in that the supporting surface (37) of the cylinder (1) on the casing (35) is arranged vertically below the sealing stud (12).

5. Cylinder head according to one or more of the precedent claims, characterized in that the supply and discharge (24, 25, 26) of the cooling oil for the ring conduit (13) are situated on the discharge valve side (31) and in the head centre (27/28) in the cylinder head.

## Revendications

1. Culasse de cylindre ou culasse de cylindre d'échange ou culasse de cylindre de rattrapage d'un moteur à combustion interne à quatre temps avec un processus de combustion avec de petites pertes de chaleur, lors duquel la combustion se fait dans un noyeau chaud qui est entouré d'une couche isolante d'un surplus d'air et lors duquel par conséquent le paroi de cylindre n'a pas besoin d'un refroidissement extérieur au moins au-dessous de la zone de porteur d'anneau du piston, caractérisée en ce que la culasse de cylindre (2) couvre au moins la zone du cylindre (1) au-dessus de la bague d'étanchéité supérieure de piston (15) et qu'un canal de circulation d'huile (13) destiné à refroider cette zone ne se trouve que dans la culasse de cylindre ou que la culasse de cylindre (2) possède à sa surface d'étanchéité au paroi de cylindre respectivement au carter-moteur une rainure pour anneau de retenue (13) qui forme, ensemble avec la surface d'étanchéité du paroi de cylindre respectivement du carter-moteur un canal de circulation d'huile qui sert à refroider cette zone.

2. Culasse de cylindre suivant revendication 1, caractérisée en ce que des canaux de réfrigérant dans le cylindre peuvent être fermés par la culasse de cylindre, respectivement qu'ils peuvent manquer dans les moteurs à combustion interne refroidés par l'air.

3. Culasse de cylindre suivant revendication 1, caractérisée en ce que l'étanchéité de gaz du cylindre est obtenue sans joint parce que l'âme d'étanchéité (12) se couche planairement sur la zone d'étanchéité (14).

4. Culasse de cylindre suivant revendication 1, caractérisée en ce que la surface portante (37) du cylindre (1) est ajustée verticalement sur le carter (35) au-dessous de l'âme d'étanchéité (12).

5. Culasse de cylindre suivant une ou plusieurs des revendications précédentes, caractérisée en ce que dans la culasse de cylindre l'entrée et l'écoulement (24, 25, 26) de l'huile de refroidissement pour le canal de ceinture (13) se trouvent au côté de la soupape d'émission (31) et au centre de culasse (27/28).
